# EUROPEAN PATENT APPLICATION

(11) **EP 4 813 755 A1**
(43) Date of publication of application: **30.09.2026**
(21) Application number: 25167182.2
(22) Date of filing: 28.03.2025
(51) Int. Cl.: B60R 16/02

(54) **ADJUSTABLE CABLE ROUTING DEVICE FOR ROUTING A CABLE ALONG AN EXTERNAL STRUCTURE**

(71) Applicant: HellermannTyton GmbH & Co. KG, 25436 Tornesch (DE)
(72) Inventor: GROCKE, Bjoern Alexander, Hamburg (DE)
(74) Representative: Hernandez, Yorck

(57) **Abstract**

The disclosure relates to a cable routing device (1) for routing a cable along an external structure, in particular in a vehicle, comprising a support bar unit (2) with a support surface (2b) for the cable, which support surface (2b) is configured for attaching the cable to the support bar unit (2) with the cable running along a main extension direction of the support bar unit (2) when attached to said support surface (2b); and at least two fixation units (3, 3', 3") that are spaced apart from each other in the main extension direction of the support bar unit (2), each fixation units (3, 3', 3") with a respective fixation means (3a, 3a', 3a"), which fixation means (3a, 3a', 3a") is configured for fixing the cable routing device (1) on the external structure; wherein at least one of the fixation units (3, 3', 3") and the support bar unit (2) are separate units; the support bar unit (2) and the at least one fixation units (3, 3', 3") each comprise one or more respective engagement elements (2c, 3c, 3c', 3c"), where the engagement elements (2c, 3c, 3c', 3c") of the at least one fixation units (3, 3', 3") are configured for engagement with the engagement elements (2c, 3c, 3c', 3c") of the support bar unit (2) at different positions of the respective fixation units (3, 3', 3") along the main extension direction of the support bar unit (2) in order to provide a simplified solution overcoming the need for said increasing number of different cable routing devices (1).

## Description

### Field of the invention

The disclosure relates to a cable routing device for routing a cable along an external structure, in particular in a vehicle. Said cable routing device comprising a support bar unit with a support surface for the cable, which support surface is configured for attaching the cable to the support bar unit with the cable running along a main extension direction of the support bar unit when attached to said support surface, and at least two fixation units that are spaced apart from each other in the main extension direction of the support bar unit, each fixation unit with a respective fixation mean, which fixation mean is configured for fixing the cable routing device on the external structure.

### Background

In several applications, in particular in vehicles, one or more cables, usually provided as harness, have to be routed through a machine, e.g. the vehicle. In many areas, space is very restricted. In challenging low-cross-section areas like A-pillars or windsockets there is a need for cable routing with a fixed length to prevent the cable from breaking out to the side, i.e. in directions perpendicular to the main extension direction (length direction) of the cable. Currently, special clip bars are being designed and installed for each application and each vehicle design. The result is a constantly increasing number of different cable routing devices (aka "clipbars"), which can usually only cover one application, since the total length as well as the number and position of the fastening elements is limited to a situation with specified distances and tolerance situations.

The technical task, therefore, is to provide a simplified solution overcoming the need for said increasing number of different cable routing devices.

### Overview

This task is solved by the objects of the independent claims. Advantageous embodiments will be apparent from the dependent claims, the description and the figures.

Contrary to a standardization of the distances of fixation means, such as holes in a car body, one aspect proposed here relates to an adjustable cable routing device, i.e. a cable routing device where one or more distances of respective fixation means, by which fixation means the cable routing device is fixed on an external structure such as said car body, is adjustable. The same adjustable cable routing device may then be adjusted to be used in different applications, e.g. different car bodies and/or different positions in a car body.

Consequently, such cable routing device is configured for routing a cable along an external structure, in particular in a vehicle where the external structure may be a car body, and comprises a support bar unit and at least two fixation units. Preferably, the number of fixation units is limited to be equal to or less than 5, preferably equal to or less than 4.

The support bar unit is defining the course of the cable along said external structure by providing a support surface for the cable, which support surface is configured for attaching the cable to the support bar unit, with the cable running along a main extension direction of the support bar unit when attached to said support surface. Thus, the main extension direction of the support surface and the support bar unit may be identical. The support surface may be concave. The support surface may be configured for glueing the cable(s) to it and/or for attaching the cable(s) to the support bar unit by cable ties. The support surface may be configured to extend, in a circumferential direction, to less than 180°, preferably less than 120°, around said cable(s). This is one possible difference of the support bar unit with respect a cable guide unit where a circumferential casing is provided to the cable.

The at least two fixation units are spaced apart from each other in the main extension direction of the support bar unit, and each fixation unit has a respective fixation mean, which fixation mean is configured for fixing the cable routing device on the external structure. The fixation means may be or comprise respective fir trees or alike, for example. Such fir tree fixation means (or alike) are specifically useful for attaching the fixation unit, thus the cable routing device, to holes in a car body. One, more, or none of the fixation units may be part of or constituted by the support bar unit and thus be referred to as integrated fixation unit. The support bar unit and an integrated fixation unit (if present) may be made as a single-piece unit, e.g. injection-molded.

In the proposed solution, at least one of the fixation units, preferably at least two of the fixation units or all of the fixation units, and the support bar unit are separate units. Thus, said at least one, at least two, or all fixation units, respectively, are, if present, separate fixation units and not integrated fixation units. This enables the flexible positioning of the fixation unit along the main extension direction of the support bar unit, consequently also the adjustment of the distance of the fixation means that allows the use of the very same type of cable routing device in different applications. To make the positioning reliable, the support bar unit and the at least one fixation unit each comprise one or more respective engagement elements of an engagement mechanism that provides a mechanical interaction of support bar unit and respective fixation unit. In particular, the engagement mechanism, i.e. the respective engagement elements are configured for hindering a lateral movement of the respective fixation unit with respect to the support bar unit. A lateral movement is a movement in a lateral direction, i.e. a direction running across the main extension direction of the support bar unit. In some embodiments the engagement mechanism, i.e. the respective engagement elements may also be configured for hindering a longitudinal movement of the respective fixation unit with respect to the support bar unit.

So the engagement elements of the at least one fixation unit are configured for engagement with the engagement elements of the support bar unit at different positions of the respective fixation unit along the main extension direction of the support bar unit, such that a distance of the fixation units (and thus of the respective fixation means) is adjustable by engaging of the fixation unit(s) at different positions of the respective fixation unit on the support bar unit. The most simple engagement mechanism could comprise a row of holes in the support bar unit, through which the fixation units are plugged into the support bar unit, e.g. with their respective fixation mean. Every hole would then correspond to a specific position of the fixation device along the support bar unit.

The proposed design gives the advantage that the very same design for a cable routing device may be used throughout a variety of applications. With respect to the application in a vehicle harness, the position of the fixation means "feet" may be adjusted and fixed when the harness is fixed to the support bar unit on a laying board, i.e. at the supplier level. The support bar unit may even be produced without fixation mean for attachment to the external structure, which further enhances versatility. Thus, fixation means as well as their distances and tolerances may be adjusted according to the needs at hand and only a reduced set of components is required to cover the vast amount of differently designed external structures. The proposed design is based on the insight that increasing the number of components to the individual cable routing device is actually resulting in a decreased overall demand for different components. This concept may the be further implemented in different ways. In particular, both a set of support bar unit with adjust- and fixable fixation units may be implemented, or a support bar unit that can be cut to length, with different fixation units that can be fixed at different positions. Furthermore, it has to be noted that separate fixation units, and also (if present) integrated fixation units may also define a distance of the support surface to the external structure via their respective geometrical design. So separate fixation units come with the advantage that said difference may be adjusted to situation at hand by choosing the appropriate fixation unit - in other words the support bar unit may be used in different application scenarios. So versatility is further improved.

In one embodiment, it is provided that the at least one fixation unit and/or the support bar unit is a one-piece unit, preferably an injection-molded one-piece unit. This makes the system particularly versatile and simple.

In a further embodiment, it is provided that at least one of the one or more fixation units, preferably all of the fixation units, is made of or with a first material, in particular a first plastic, and the support bar unit is made of or with a second material, in particular a second plastic, where the first and the second material are different materials. So the material of the individual units may be optimized with respect to the individual requirements, such as flexibility, weight, cost, and CO2-footprint. In particular, the support bar unit (as larger unit as compared to the fixation units) may be made with or of Polypropylen. The fixation units may be made with or of a more durable material, in particular plastic, than the support bar unit.

In another embodiment, it is provided that the fixation means, also a potential fixation mean of the support bar unit, are or comprise identical types of fixation means. Thus, the fixation means of the different units may be based on the same working principle. In particular, the fixation means may be or comprise fir tree type fixation means for fixation in a hole of the external structure. This further simplifies the modular principle of the proposed solution. Fir tree fixation means are particularly useful for attachment to car bodies. The fixation mean of the support bar unit may be considered as fixation mean of a fixation unit constituted by the support bar unit in some embodiments.

In a further embodiment, it is provided that at least two of the fixation units are different types of fixation units. In particular different types of fixation units may differ one from another by distance and/or orientation of the fixation mean with respect to the support bar unit in an engaged state (i.e. when fixation unit and support bar unit are engaged via engagement mechanism). This further enhances product versatility and reduced the overall number of required different components.

In one embodiment, it is provided that the support bar unit itself comprises at least one fixation mean configured for fixing the cable routing device on the external structure. Preferably the fixation mean of the support bar unit is or comprises the same type(s) of fixation mean(s) than the fixation units. So the fixation mean of the support bar unit may be identical to the fixation mean(s) of the fixation unit(s). This is advantageous since cable routing devices are lengthy (i.e. main extension may be a multiple of the lateral extension, see below), and consequently always require at least two fixation means. Already on adjustable fixation unit serves well for adjusting distances of the fixation means, though. So the number of parts is further reduced while versatility is maintained.

In a further embodiment, it is provided that the engagement elements are configured for adjusting the distance of the corresponding fixation means to the next-neighboring fixation means in a distance range of at least 15mm, preferably at least 20mm, more preferably by at least 25mm, in particular by at least 40mm. Thus, given a fixed position of the next-neighboring fixation means, a minimal distance and maximal distance of the corresponding fixation means to said fixed-position next-neighboring fixation means differ by said amount of at least said 15/20/25mm. These values have been proven particularly advantageous.

In one embodiment, it is provided that the engagement elements are configured for adjusting the distance of the corresponding fixation means to the next-neighboring fixation means with a precision of 10mm or less, preferably 3mm or less, more preferably of 1,5mm or less. While a precision of 10mm may e.g. be achieved by the above-mentioned row of holes (which then are placed in a distance of 10mm), higher precision, thus a higher tolerance requirements may be met e.g. by teeth and counter-teeth as part of the fixation means on support bar unit and fixation unit(s). Again, said values have been proven particularly advantageous in practical applications.

In a further embodiment, it is provided that at least two (preferably all) of the engagement elements (i.e. at least on set of engagement means configured for engaging with one another) are configured for a minimal distance between next-neighboring fixation means of at least 50mm, preferably at least 100mm, more preferably at least 200mm, and/or a maximal distance of less than 400mm, preferably less than 300mm, even more preferably less than 200mm, where the distance is measured while the fixation units are engaged with the support bar unit via said engagement elements. This is advantageous since it reduces the requirements on the support bar unit, in particular, and said minimal/maximal distance values, which also impose requirements on the number of fixation units in a given application, provide a sufficient stability with a minimal number of components.

In another embodiment, it is provided that the engagement means of the fixation units feature at least two guide flanks that are configured to mechanically interact with edges of the support bar unit running along the main extension direction of the support bar unit and to counteract rotation and/or lateral movement of the respective fixation unit relative to the support bar unit. The guide flanks may be or comprise two outer guide flanks and/or two inner guide flanks. The edges may delimit the support surface of the support bar unit. Corresponding to the guide flanks, the edges may be or comprise two outer edges and/or two inner edges. The inner edges may delimit the below-mentioned elongated hole of the support bar unit and/or the support surface. Alternatively or in addition, the edges may be oriented oppositely. This enhances stability and allows a simplified design of the different units with a unified mechanical interface/engagement mechanism.

In a further embodiment, it is provided that the engagement elements of the support bar unit comprise one or more respective elongated holes configured for sliding the corresponding fixation unit along said elongated hole while the corresponding fixation unit is engaged with the support bar unit. This allows to adjust the distance of said corresponding fixation element to the next-neighboring fixation element while engaged the support bar unit in stepless/continuous way, in particular while said guide flanks are interacting with said edges (see last paragraph). This results in a particularly easily and reliably adjusting of the cable routing device.

In another embodiment, it is provided that the fixation units comprise an auxiliary support surface for the cable, which auxiliary support surface is configured for attaching the cable to the respective fixation unit (at a given longitudinal position of the fixation unit). This allows to attach the cable(s) also to the fixation unit, which provides additional support to the cable(s), but also fixes the fixation unit in its position along the main extension direction of the support bar unit. Thus, the auxiliary support surface hindering longitudinal relative movement of the fixation unit with respect to the cable, and consequently also with respect to the support bar unit. The cable(s) may be attached to the auxiliary support surface by glue and/or by friction (this also in absence of glue). Friction may be enhanced by one or more cable ties applied in the (longitudinal) section of the cable corresponding to the respective auxiliary support surface, or, due to cable stiffness, in a section without the auxiliary support surface. In consequence, overall stability and, in particular for stepless/continuous adjustment: precision, increases, and the stability requirements on the individual parts decrease.

In particular, the auxiliary support surface of the fixation unit may be an extension of the support surface of the support bar unit in the main extension direction of the support bar unit, in particular running in the same or at least essentially same flat or curved plane. So the auxiliary support surface may be an elongation of the original support surface, whether plane or concave. This allows a particularly thin design of the cable routing device, thus further increases versatility.

In another embodiment, it is provided that a minimal thickness of the support bar unit is at least 30%, preferably at least 45%, of a total thickness of the support bar unit. There, the total thickness is ignoring any fixation means of the support bar unit if present. This because the fixation means will, in most applications, be arranged in a hole, thus not take up assembly space and consequently is not relevant to thickness considerations during constructional design, thus versatility of the cable routing device. The minimal thickness may be the thickness of the support bar unit in a subsection of the support surface. The thicknesses are measured in a thickness direction running perpendicular to a lateral direction and the main extension direction. This further increases versatility of the cable routing device.

In a further embodiment, it is provided that a length of the cable routing device measured along the main extension direction of the support bar unit exceeds a breadth and/or thickness of the cable routing device by a factor of at least 10, preferably by a factor of at least 20. So the cable routing device is lengthy, which makes the proposed design particularly useful.

Another aspect relates to a method for assembling or pre-assembling one or more cables, in particular a harness, on a cable routing device. The cable routing device comprises a support bar unit with a support surface for the one or more cables and at least one fixation unit with a fixation mean and preferably also with an additional support surface for the one or more cables. The method comprises placing at least two fixation means, at least one fixation mean being a fixation mean of one of said at least one fixation unit, another fixation means being a fixation mean of another one of said at least one fixation unit or of the support bar unit, at predefined positions on a laying board with a given distance to one another. While the fixation means are placed or being placed at said predefined positions, the at least one fixation unit engages with the support bar unit via an engagement mechanism. Also, the one or more cables are attached to the support surface of the support bar unit and preferably also to the at least one additional support surface of the at least one fixation unit. If the one or more cables are attached also to the at least one additional support surface, this automatically results in fixing the at least two fixation means in the given distance. Otherwise, e.g. the engagement mechanism itself may be designed to prevent longitudinal movement of the fixation units, i.e. fix the at least two fixation means in the given distance. Finally, the cable routing device including the attached one or more cables are removed from the laying board.

Advantages and advantageous embodiments of the latter aspects correspond to the advantages and advantageous embodiments described for the former aspect, and vice versa.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially perpendicular/parallel", i.e. " perpendicular/parallel" or "substantially perpendicular/parallel", i.e. perpendicular/parallel except for a predetermined deviation.

The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially anti-parallel oriented". The orientation of a plane may be determined by its normal vector. The limitation "substantially" may also refer to a percentage predetermined maximum permissible deviation, for example at most 15%, preferably at most 5%, particularly preferably at most 3%.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### Detailed description

Example embodiments are described in more detail below with reference to schematic drawings. Therein
- Fig. 1A: shows a perspective view on a first example embodiment of a cable routing device;
- Fig. 1B: shows a perspective view on a detail of the example of Fig. 1A;
- Fig. 1C: shows an alternative perspective view on the detail of Fig. 1B;
- Fig. 2A: shows a perspective view on a second example embodiment of a cable routing device; and
- Fig. 2B: shows a perspective view on a detail of the example of Fig. 2A

In the figures, the same or functionally identical features are provided with the same reference signs.

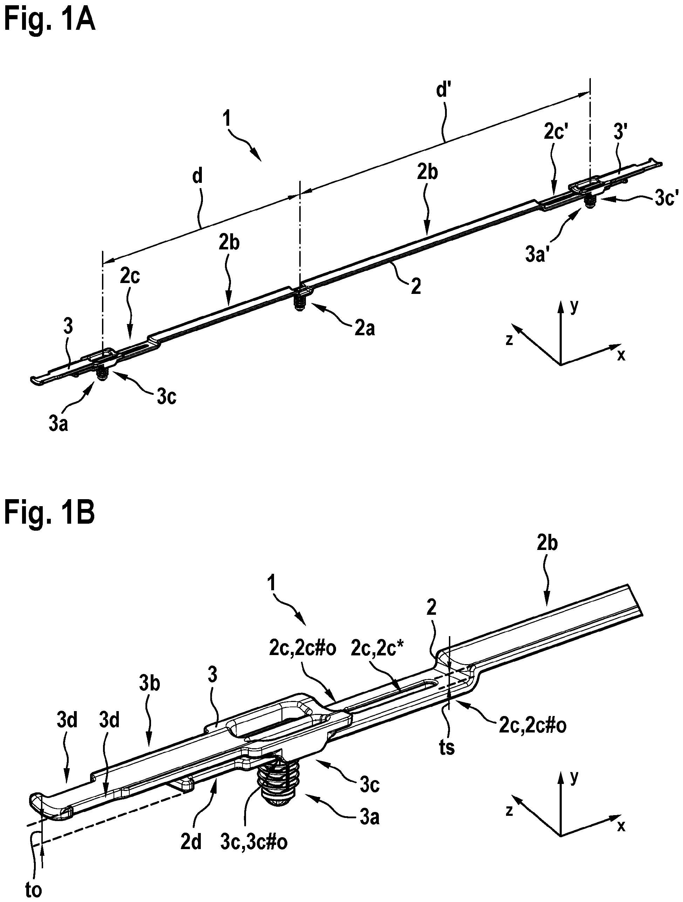

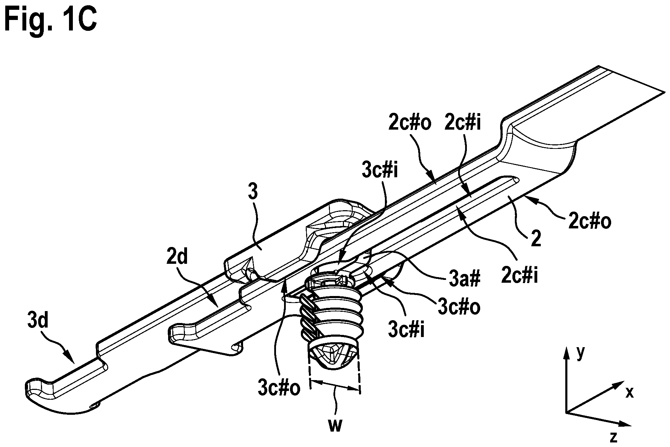

In Figure 1A, a first example cable routing device for routing one or more cables, preferably in form of a harness, along an external structure is shown. The cable routing device 1 comprises a support bar unit 2 and at least two, here exactly two, fixation units 3, 3'. In Figs. 1, a set of support bar unit 2 with adjust- and fixable fixation units 3, 3' is implemented.

The support bar unit 2 has a support surface 2b for the cable (not shown), which support surface 2b is configured for attaching the cable to the support bar unit 2 with the cable running along a main extension direction (here x-direction) of the support bar unit 2 when attached to said support surface 2b. The fixation units 3, 3' are spaced apart from each other in the main extension direction of the support bar unit 2, each fixation unit 3, 3'with a respective fixation mean 3a, 3a', which fixation mean 3a, 3a' is configured for fixing the cable routing device 1 on the external structure (not shown). In the present example, the individual fixation means 3a, 3a' are of the same type, here a fir tree type adapted for fixing the cable routing device 1 in holes of a car body, for instance.

Therein, the fixation units 3, 3' and the support bar unit 2 are separate units, i.e. the fixation units 3, 3' are separate fixation units 3, 3'. Note that in the present example, the fixation units 3, 3' are actually identical components engaging the support bar unit 2 in opposite end regions of the cable routing device 1. The support bar unit 2 and the at least one fixation unit 3, 3' each comprise one or more respective engagement elements 2c 2c', 3c, 3c'. The engagement elements 3c, 3c' of the at least one fixation unit 3, 3' are configured for engagement with the engagement elements 2c, 2c' of the support bar unit 2, where the support bar unit engagement elements 2c, 2c' are arranged at different positions of the respective fixation unit 3, 3' along the main extension direction of the support bar unit 2.

In the present example, the support bar unit 2 additionally comprises at least one fixation mean 2a configured for fixing the cable routing device 1 on the external structure. Here the (additional) fixation mean 2a of the support bar unit 2 (with additional integrated fixation unit) is a fixation mean 2a identical to the fixation means 3a, 3a' of the fixation units 3, 3', namely fir tree fixation means. The integrated fixation unit, i.e. the geometrical shape of the support bar unit 2 in the vicinity of the fixation mean 2a, defines a distance of the fixation means 2a, thus the external structure to the support surface 2b in the thickness/height direction (y-direction here). Integrated and/or separate fixation units generally may also define one or more distances in other directions, e.g. in the lateral direction.

The engagement elements 2c, 2c', 3c, 3c'may be configured for adjusting a distance d, d' of the corresponding fixation means 3a, 3a' to the next-neighboring fixation means 2a in a distance range of some variable value v, e.g. at least 15mm, such that the respective adjustable distance d=V+v, with V being a fixed value determined by the design of the support bar unit. Exemplary value ranges for the adjustable distance may be d=140-170mm and/or d'=230-250mm.

As apparent from Fig. 1B, in the shown design the engagement elements 2c, 3c' of the support bar unit 2 comprise one respective elongated hole 2c* configured for sliding the corresponding fixation unit 3, 3' along said elongated hole while the corresponding fixation unit 3, 3' is engaged with the support bar unit 2. Note that the fixation means 3a also acts as engagement means 3c here, as it also serves as guiding pin 3a# (Fig. 2C) in the elongated hole 2c*. In addition, the engagement means 3c, 3c' of the fixation units 3, 3' feature two outer guide flanks 3c#o that are configured to mechanically interact with outer edges 2c#o of the support bar unit 2 running along the main extension direction of the support bar unit 2 and to counteract rotation and/or lateral movement of the respective fixation unit 3, 3' relative to the support bar unit 2 in the present example by stabilizing the support bar unit 2 where it is destabilized by the elongated hole 2c*. The respective guide flanks 3c#o and edges 2c#o interacting with one another are orientated opposite to each other, as are both of the edges 2c#o and guide flanks 3c#o in this illustration. This is explained in more detail with reference to Fig. 1C below.

In the shown example, the fixation units 3, 3' comprise an auxiliary support surfaces 3b for said cable, which auxiliary support surface 3b is configured for attaching the cable to the respective fixation unit 3. The auxiliary support surface 3b of the fixation unit 3, 3' is an extension of the support surface 2b of the support bar unit 2 along the main extension direction of the support bar unit, here it is running in the same or at least essentially same plane. The surfaces 2b, 3b are concave. Note that in this example both support bar unit 2 and fixation units 3, 3' comprise respective lateral recesses 2d, 3d, 3d' that are configured for hindering unintended longitudinal sliding of respective cable ties/tapes that are used for attaching the cable(s) to support bar unit 2 and fixation units 3, 3'. Support bar unit 2 and/or fixation units 3, 3' may also comprise a protrusion in the thickness direction (negative y-direction here) in the shown end section(s) of support bar unit 2 and fixation units 3, 3', respectively, to hinder longitudinal sliding of respective cable ties/tapes over the end section(s).

In the design shown in Figs. 1A, 1B, 1C a minimal thickness ts of the support bar unit 2 in a corresponding subsection is about 50% of a total thickness to of the support bar unit 2, where the overall or total thickness to is ignoring the fixation means 2a of the support bar unit 2. The thicknesses are measured in a thickness direction (here y-direction) running perpendicular to a lateral direction (here z-direction) and the main extension direction (here x-direction).

As apparent from Fig. 1C, the proposed solution may also comprise inner guide flanks 3c#i that are configured to mechanically interact with inner edges 2c#i of the elongated hole 2c*. They also counteract rotation and/or lateral movement of the respective fixation unit 3, 3' relative to the support bar unit 2. Preferably, the elongated hole 2c* is adapted to a lateral width w of the fixation means 3a only at one position, such that the fixation means 3a can only be put through the support bar unit 2 at said one position. The design with both inner and outer guide flanks 3c#i, 3c#o engaging with the respective inner and outer edges 2c#i, 2c#o allows, due to the stabilizing effect of the outer guide flanks 3c#o and the rotation counteraction of the inner guide flanks 3c#i, for a particular slim design in lateral and thickness direction. This is further fostered by slim elongated hole 2c* that only allows the fixation means 3a to be put through it at said one position.

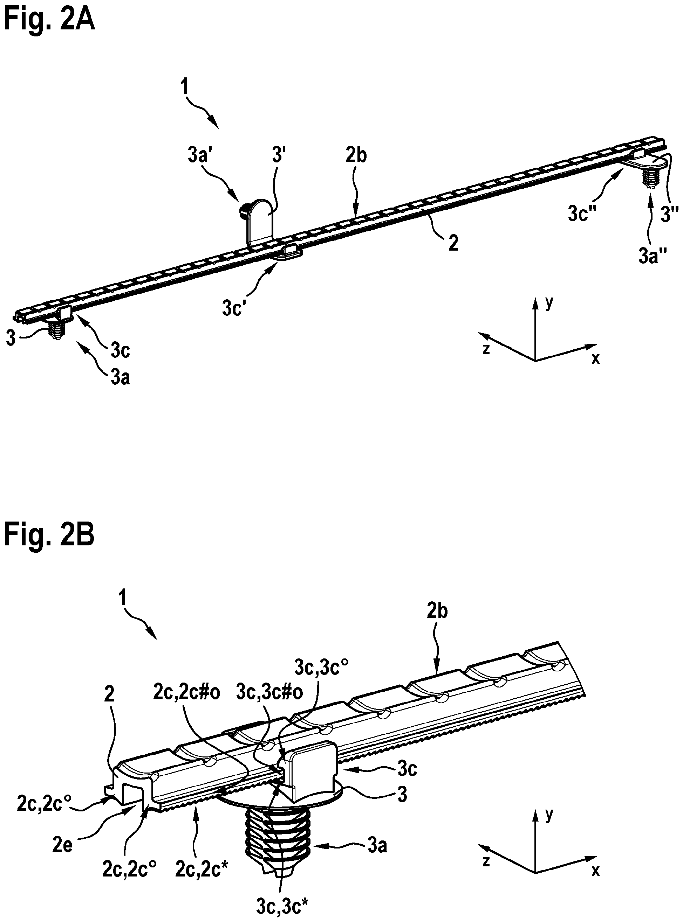

In Figure 2A, a second example cable routing device for routing one or more cables, preferably in form of a harness, along an external structure is shown. In Figs. 2, a support bar unit 2 that can be cut to length, with different fixation units 3, 3', 3" that can be fixed at different positions is shown. Consequently, all the fixation means 3a, 3a', 3a" are provided by fixation units 3, 3', 3", not by the support bar unit 2.

The engagement means 2c, 3c do not impose a minimal distance for adjacent fixation units 3, 3', 3" here. Instead, as shown in Fig. 2B, teeth 2c* (or other types of locking elements such as grooves) as part of the engagement element 2c of the support bar unit 2 are configured to engage counter-teeth 3c* (or other types of counter-locking elements such as one or more pins) as part of the engagement element 3c of the respective fixation unit 3, 3', 3" hinder a longitudinal movement (x-direction here) of the respective fixation unit 3, 3', 3" along the support bar unit 2 when engaged with each other. Teeth 2c* and counter-teeth 3c* are configured for establishing a form-fit connection between support bar unit 2 and fixation unit 3.

The teeth 2c* are provided on a bottom side (oriented at least essentially in negative y-direction here) of the support bar unit 2 in this example, with the support surface 2b being located on a top side (oriented at least essentially in the positive y-direction here). Alternatively to the bottom side of rails 2c°, the teeth 2c* may also be provided on other sides e.g. lateral sides of said rails 2c° (oriented in positive and negative z-direction here) or top sides of said rails 2c° (oriented in positive y-direction here). The teeth 2c* may also be provided in a channel 2e (which channel 2e is preferably only accessible form the bottom side) of the support bar unit 2, preferably on a bottome side, i.e. a side oriented in the negative y-direction.

The engagement mechanism of Figs. 2 does not provide a stepless adjustment, but a precision of down to 1mm or even less (e.g. 0,8mm) can be realized for adjusting the distance of the fixation unit 3, 3', 3", thus the fixation means 3a, 3a', 3a".

Also in this embodiment, guide flanks 3c# hinder rotation and/or lateral movement of the fixation units 3, 3', 3" with respect to the support bar unit 2. In addition, the fixation means 3c comprise snap-in hooks 3c° that engage corresponding rails 2c° of the support bar unit 2. These snap-in hooks 3c° encompass the rails 2c° and thereby hold the fixation units 3, 3', 3" attached to the support bar unit 2, i.e. counter-teeth 3c* engaged with teeth 2c*, when snapped onto the rails 2c° (in the y-direction here). Thus, when engaged with the support bar unit 2, the fixation units 3, 3', 3" cannot be slid along the support bar unit 2 even in absence of the cable(s). Thus, in this embodiment, the cable(s) is/are not required to fix the fixation unit 3, 3', 3" in their intended position on the support bar unit 2.

The design of the engagement elements 2c, 3c, i.e. locking elements with corresponding counter-locking elements such as teeth 2c* and counter-teeth 3c* shown in Figs. 2A, 2B may also be applied in the embodiment of Figs. 1A-1C. Additionally or alternatively, also the fixation units 3, 3' of the embodiment of Figs. 1A-1C may be provided with snap-in hooks 3c° as shown in the embodiment of Figs. 2A, 2B.

## Claims

1. Cable routing device (1) for routing a cable along an external structure, in particular in a vehicle, comprising:
- a support bar unit (2) with a support surface (2b) for the cable, which support surface (2b) is configured for attaching the cable to the support bar unit (2) with the cable running along a main extension direction of the support bar unit (2) when attached to said support surface (2b); and
- at least two fixation units (3, 3', 3") that are spaced apart from each other in the main extension direction of the support bar unit (2), each fixation units (3, 3', 3") with a respective fixation means (3a, 3a', 3a"), which fixation means (3a, 3a', 3a") is configured for fixing the cable routing device (1) on the external structure; **characterized in that**
- at least one of the fixation units (3, 3', 3") and the support bar unit (2) are separate units;
- the support bar unit (2) and the at least one fixation units (3, 3', 3") each comprise one or more respective engagement elements (2c, 3c, 3c', 3c"), where
- the one or more engagement elements (2c, 3c, 3c', 3c") of the at least one fixation units (3, 3', 3") are configured for engagement with the one or more engagement elements (2c, 3c, 3c', 3c") of the support bar unit (2) at different positions of the respective fixation units (3, 3', 3") along the main extension direction of the support bar unit (2).

2. Cable routing device (1) according to the preceding claim,
wherein
the at least one fixation unit (3, 3', 3") and/or the support bar unit (2) is a one-piece unit, preferably an injection-molded one-piece unit.

3. Cable routing device (1) according to any one of the preceding claims,
wherein
at least one of the one or more fixation units (3, 3', 3"), preferably all of the fixation units (3, 3', 3"), is made of or with a first material, in particular a first plastic, and the support bar unit (2) is made of or with a second material, in particular a second plastic, where the first and the second material are different materials.

4. Cable routing device (1) according to any one of the preceding claims,
wherein
the fixation means (3a, 3a', 3a") are or comprise identical types of fixation means (3a, 3a', 3a"), in particular fir tree type fixation means (3a, 3a', 3a").

5. Cable routing device (1) according to any one of the preceding claims,
wherein
the support bar unit (2) comprises at least one fixation means (2a) configured for fixing the cable routing device (1) on the external structure, preferably with the fixation means (2a) of the support bar unit (2) being or comprising a fixation means (2a) identical to the fixation means (3a, 3a', 3a") of the fixation units (3, 3', 3").

6. Cable routing device (1) according to any one of the preceding claims,
wherein
the engagement elements (2c, 3c, 3c', 3c") are configured for adjusting the distance of the corresponding fixation means (3a, 3a', 3a") to the next-neighboring fixation means (3a, 3a', 3a") in a distance range of at least 15mm, preferably at least 20mm, more preferably by at least 25mm.

7. Cable routing device (1) according to any one of the preceding claims,
wherein
the engagement elements (2c, 3c, 3c', 3c") are configured for adjusting the distance (d, d') of the corresponding fixation means (3a, 3a', 3a") to the next-neighboring fixation means (3a, 3a', 3a") with a precision of 10mm or less, preferably 3mm or less, more preferably of 1,5mm or less.

8. Cable routing device (1) according to any one of the preceding claims,
wherein
the engagement elements (2c, 3c, 3c', 3c") are configured for a minimal distance (d, d') between next-neighboring fixation means (3a, 3a', 3a") of at least 100mm, preferably 200mm, and/or a maximal distance (d, d') of at most 200mm, preferably at most 300mm, where the distance is measured while the fixation units (3, 3', 3") are engaged with the support bar unit (2).

9. Cable routing device (1) according to any one of the preceding claims,
wherein
the engagement means of the fixation units (3, 3', 3") feature two guide flanks (3c#) that are configured to mechanically interact with edges (2c#) of the support bar unit (2) running along the main extension direction of the support bar unit (2) and to counteract rotation and/or lateral movement of the respective fixation units (3, 3', 3") relative to the support bar unit (2).

10. Cable routing device (1) according to any one of the preceding claims,
wherein
the engagement elements (2c, 3c, 3c', 3c") of the support bar unit (2) comprise one or more respective elongated holes (2c*) configured for sliding the corresponding fixation units (3, 3', 3") along said elongated hole (2c*) while the corresponding fixation units (3, 3', 3") is engaged with the support bar unit (2).

11. Cable routing device (1) according to any one of the preceding claims,
wherein
the at least one fixation unit (3, 3', 3") comprises an auxiliary support surface (3b) for the cable, which auxiliary support surface (3b) is configured for attaching the cable to the respective fixation unit (3, 3', 3").

12. Cable routing device (1) according to the preceding claim,
wherein
the auxiliary support surface (3b) of the fixation units (3, 3', 3") is an extension of the support surface (2b) of the support bar unit (2) in the main extension direction of the support bar unit (2), in particular running in the same or at least essentially same plane.

13. Cable routing device (1) according to any one of the preceding claims,
wherein
a minimal thickness (ts) of the support bar unit (2) is at least 30%, preferably at least 45%, of a total thickness (to) of the support bar unit (2), where the total thickness (to) is ignoring any fixation means (3a, 3a', 3a")s of the support bar unit (2) if present, and the thicknesses (ts, to) are measured in a thickness direction running perpendicular to a lateral direction and the main extension direction.

14. Cable routing device (1) according to any one of the preceding claims,
wherein
a length of the cable routing device (1) measured along the main extension direction of the support bar unit (2) exceeds a breadth and/or thickness of the cable routing device (1) by a factor of at least 10, preferably by a factor of at least 20.

15. Method for assembling one or more cables on a cable routing device (1) comprising a support bar unit (2) with a support surface (2b) for the one or more cables and at least one fixation unit (3, 3', 3") with a fixation means (3a, 3a', 3a") and with an additional support surface (3b) for the one or more cables, including the method steps of:
- Placing at least two fixation means (2a, 3a, 3a', 3a"), at least one fixation means (3a, 3a', 3a") being a fixation means (3a, 3a', 3a") of one of said at least one fixation unit (3, 3', 3"), another fixation means (2a, 3a, 3a', 3a") being a fixation means (2a, 3a, 3a', 3a") of another one of said at least one fixation units (3, 3', 3") or of the support bar unit (2), at predefined positions on a laying board with a given distance;
- Engaging the at least one fixation units (3, 3', 3") with the support bar unit (2) while the fixation means (2a 3a, 3a', 3a") are placed or being placed at the predefined positions;
- Attaching the one or more cables to the support surface (2b) of the support bar unit (2) and the at least one additional support surface (3b) of the at least one fixation unit (3, 3', 3"), thereby fixing the at least two fixation means (2a 3a, 3a', 3a") in the given distance; and
- Removing the cable routing device (1) including the attached one or more cables from the laying board.
